# EUROPÄISCHE PATENTSCHRIFT

(11) **EP 1 920 145 B1**
(45) Veröffentlichungstag und Bekanntmachung des Hinweises auf die Patenterteilung: **31.03.2010**
(21) Anmeldenummer: 06762960.0
(22) Anmeldetag: 03.08.2006
(51) Int. Cl.: F02D 41/12, F01N 11/00

(54) **VERFAHREN ZUR ÜBERWACHUNG EINES ABGASREINIGUNGSBAUTEILS**
METHOD FOR MONITORING AN EXHAUST GAS PURIFYING COMPONENT
PROCEDE DE SURVEILLANCE D'UNE PARTIE STRUCTURALE DE PURIFICATION DES GAZ D'ECHAPPEMENT

(30) Priorität: 30.08.2005 DE 102005040906
(43) Veröffentlichungstag der Anmeldung: 14.05.2008
(73) Patentinhaber: Daimler AG, 70327 Stuttgart (DE)
(72) Erfinder: BRINKMEIER, Clemens, 71229 Leonberg (DE); SCHÖN, Christof, 73630 Remshalden (DE); VENT, Guido, 71522 Backnang (DE)
(74) Vertreter: JENSEN & SON
(86) Internationale Anmeldenummer: PCT/EP2006/007684
(87) Internationale Veröffentlichungsnummer: WO 2007/025626

(56) Entgegenhaltungen:
- DE-A1- 19 963 902
- US-A- 5 431 012
- US-A- 5 435 172
- US-B1- 6 761 023

## Beschreibung

Die Erfindung betrifft ein Verfahren zur Überwachung eines Abgasreinigungsbauteils mit Gasspeicherfähigkeit zur Reinigung von Abgasen einer Brennkraftmaschine nach dem Oberbegriff des Anspruchs 1.

Aus der WO 96/01364 ist ein Katalysatorüberwachungssystem zur Überwachung eines Abgasreinigungsbauteils mit Gasspeicherfähigkeit zur Reinigung von Abgasen einer Brennkraftmaschine bekannt. Das System umfasst ein Dünnfilm-Widerstandsthermometer als Temperatursensor, der in einem Abgasreinigungsbauteil integriert sein kann. Mit dem Temperatursensor werden die an einem Katalysatormaterial bei der Oxidation von reduzierenden Abgasbestandteilen infolge von dabei frei werdender Reaktionswärme auftretenden Temperaturänderungen erfasst. Diese dienen als Maß zur Beurteilung der Aktivität des Katalysators bezüglich der betreffenden Oxidationsreaktionen. Eine Verschlechterung der katalytischen Aktivität hat eine verminderte Umsetzung der oxidierbaren Abgasbestandteile und damit geringere Temperaturänderungen zur Folge. Durch Vergleich mit Referenzwerten kann eine Katalysatorverschlechterung festgestellt werden. Die Größe der bei der Umsetzung der oxidierbaren Bestandteile auftretenden Temperaturänderung ist jedoch in starkem Maße von den Randbedingungen, wie Abgaszusammensetzung, Abgasdurchsatz, Abgastemperatur und dergleichen abhängig. Eine Auswertung der Temperaturänderungen hinsichtlich der Katalysatoraktivität ist deshalb schwierig und kann zu Fehlinterpretationen führen.

Aufgabe der Erfindung ist es daher, ein Verfahren anzugeben, welches eine verbesserte Überwachung eines Abgasreinigungsbauteils mit Gasspeicherfähigkeit ermöglicht.

Diese Aufgabe wird durch ein Verfahren mit den Merkmalen des Anspruchs 1 gelöst.

Erfindungsgemäß wird bei dem Verfahren zur Überwachung eines Abgasreinigungsbauteils mit Gasspeicherfähigkeit eine im Wesentlichen auf einer Wärmetönung des Modifikationsübergangs des Gasspeichermaterials beruhende Temperaturänderung des Abgasreinigungsbauteils und/oder des Gasspeichermaterials ausgewertet. Eine Einspeicherung eines Gases in das Gasspeichermaterial ist mit einem Modifikationsübergang des Gasspeichermaterials verbunden, der von einer Wärmetönung begleitet ist. Bei dem Modifikationsübergang handelt es sich vorzugsweise um eine Veränderung der chemischen Struktur des Gasspeichermaterials infolge der Gasspeicherung durch eine chemische Reaktion des Gasspeichermaterials mit dem Gas. Beispiele sind hier eine Einspeicherung von Stickoxiden in Form von Nitraten in ein Stickoxidspeichermaterial, welches im Ausgangszustand beispielsweise als Karbonat vorliegt. Ebenfalls eine chemische Strukturänderung erfolgt bei der Speicherung von Sauerstoff in ein Sauerstoffspeichermaterial wie Ceroxid oder einem Ceroxid-haltigen Mischoxid, die bei Sauerstoffaufnahme in eine sauerstoffreiche Modifikation mit höherer chemischer Wertigkeit übergehen.

Es kann sich jedoch auch um eine Modifikationsänderung in Form einer Ausbildung einer Chemisorptionsbindung des Gasspeichermaterials mit dem Gas handeln, bei welcher die chemische Struktur des Gasspeichermaterials im wesentlichen unverändert bleibt, jedoch das eingespeicherte Gas durch schwache chemische Bindungen an das Gasspeichermaterial gebunden wird. Ein Beispiel hierfür ist die Adsorption von Kohlenwasserstoffen in dafür geeignete Speichermaterialien wie beispielsweise Zeolithe.

Die mit diesen chemischen Reaktionen oder Bindungsvorgängen verbundenen Reaktions- und/oder Sorptionsenthalpien führen zu einer so genannten Wärmetönung, welche wiederum eine messbare Temperaturänderung des Gasspeichermaterials bzw. der Abgasreinigungskomponente zur Folge haben. Beim Übergang des Gasspeichermaterials von einer ersten in eine zweite Modifikation kann es sich auch um eine Mischform der genannten Modifikationsübergänge handeln. Dementsprechend handelt es sich bei dem Abgasreinigungsbauteil vorzugsweise um einen katalytischen Konverter und/oder einen Adsorber mit einem Gasspeichermaterial, welches eine Abgaskomponente wie Sauerstoff, Stickoxid, Schwefeloxid, Ammoniak, Kohlenwasserstoff, Kohlenmonoxid, Kohlendioxid oder Wasser binden kann. Besonders geeignet ist das Verfahren für die Überwachung von katalytischen Abgasreinigungsbauteilen in der Art von Trägerkatalysatoren. Bei diesen ist das Gasspeichermaterial auf einem Keramikträger oder auf einem Metallfolienträger, vorzugsweise in der Form eines Wabenkörpers aufgebracht.

Das Ausmaß der Temperaturänderung ist einerseits von der Art des Modifikationsübergangs abhängig. Durch Erfassung und Auswertung der mit einem Modifikationsübergang verbundenen Temperaturänderung kann daher auf dessen Art und Intensität geschlossen werden und das Abgasreinigungsbauteil dahingehend überwacht werden.

Andererseits beeinflusst die vom Modifikationsübergang betroffene Menge des Gasspeichermaterials das Ausmaß der Temperaturänderung. Durch Auswertung der mit einem Modifikationsübergang verbundenen Temperaturänderung kann daher auf die Menge des aktiven Gasspeichermaterials geschlossen und das Abgasreinigungsbauteil auf einen Material- oder Aktivitätsschwund hin überwacht werden.

In Ausgestaltung des Verfahrens wird die Temperaturänderung in Bezug auf eine Alterung des Abgasreinigungsbauteils ausgewertet. Beispielsweise infolge einer Temperaturbelastung büßen Abgasreinigungsbauteile im Laufe ihrer Gebrauchszeit im Allgemeinen an ihrer Fähigkeit zur Gasspeicherung ein. Häufig erfolgt dies durch einen Aktivitätsverlust des Gasspeichermaterials infolge von Sinterungs- und/oder Phasenumwandlungs- bzw. Phasensegregationsprozessen. Durch Auswertung der durch den Modifikationswechsel des Gasspeichermaterials verursachten Temperaturänderungen kann daher das Ausmaß der Alterung des Abgasreinigungsbauteils und beispielsweise eine Alterungskennzahl ermittelt werden.

In weiterer Ausgestaltung des Verfahrens wird die bei einem Betriebsartwechsel der Brennkraftmaschine auftretende Temperaturänderung ausgewertet. Bevorzugt ist dabei ein Betriebsartwechsel, bei welchem die Zusammensetzung des Brennkraftmaschinenabgases von unterstöchiometrisch, also reduzierend auf überstöchiometrisch, also oxidierend wechselt. Bei einem solchen Betriebsartwechsel ändert sich die Abgaszusammensetzung hinsichtlich wesentlicher Abgasbestandteile erheblich. Hiervon ist auch die Speicherung von Abgasbestandteilen in das vom Abgas durchströmte Abgasreinigungsbauteil betroffen. Folglich kann bei einem Betriebsartwechsel der genannten Art eine Überwachung und Beurteilung des Abgasreinigungsbauteils effektiv durchgeführt werden. Besonders vorteilhaft ist es in diesem Zusammenhang, wenn in weiterer Ausgestaltung des Verfahrens diejenige Temperaturerhöhung ausgewertet wird, die bei einem Wechsel von einem Zugbetrieb der Brennkraftmaschine mit unterstöchiometrischem Luft-Kraftstoffverhältnis (λ < 1,0) zu einem Schubbetrieb mit überstöchiometrischem Luft-Kraftstoffverhältnis (λ > 1,0) auftritt.

In weiterer Ausgestaltung des Verfahrens wird ein Abgasreinigungsbauteil mit Sauerstoffspeicherfähigkeit überwacht. Vorzugsweise handelt es sich dabei um einen Oxidationskatalysator und/oder einen Dreiwege-Katalysator oder einen Stickoxid-Speicherkatalysator. Bei diesen Katalysatortypen ist die Sauerstoffspeicherfähigkeit für die Katalysatorfunktion von Bedeutung. Durch das erfindungsgemäße Verfahren kann daher eine Diagnose hinsichtlich einer Katalysatorwirksamkeit insbesondere bei den genannten Katalysatortypen durchgeführt werden.

In weiterer Ausgestaltung des Verfahrens wird ein Abgasreinigungsbauteil mit einem Ceroxid-haltigen Gasspeichermaterial überwacht. Ceroxid-haltige Materialien verfügen über ein Sauerstoffspeichervermögen, wobei bei einer Speicherung von Sauerstoff der Anteil an dreiwertigem Ceroxid (Ce2O3) zugunsten des vierwertigen Ceroxids (CeO2) abnimmt. Dieser Vorgang ist mit einer Wärmefreisetzung verbunden, weshalb erfindungsgemäß Ceroxid-haltige Abgasreiniungsbauteile besonders effektiv überwacht werden können.

In weiterer Ausgestaltung des Verfahrens erfolgt an wenigstens zwei unterschiedlichen Stellen im Abgasreinigungsbauteil eine Erfassung der Temperaturänderungen. Da Abgasreinigungsbauteile meist in axialer Richtung, d.h. in Richtung der Abgasdurchströmung einer abnehmenden Beanspruchung ausgesetzt sind, ist es besonders vorteilhaft, wenn an axial zueinander versetzten Stellen die Temperaturänderungen erfasst werden. Auf diese Weise kann eine Überwachung besonders genau erfolgen und eine Alterung ortsaufgelöst ermittelt werden.

In weiterer Ausgestaltung des Verfahrens erfolgt eine Erfassung der Temperaturänderung an einer in Richtung der Abgasströmung von einer Abgaseintrittsseite des Abgasreinigungsbauteils beabstandeten Stelle. Mit einer beabstandet zur Gaseintrittsseite vorgenommenen Temperaturerfassung wird vermieden, dass hauptsächlich an der Abgaseintrittsseite auftretende exotherme Oxidationen von Abgaskomponenten die Wärmetönung einer Modifikationsumwandlung des Gasspeichermaterials stören oder verfälschen. Daher kann ein insbesondere exothermer Modifikationsübergang an einer von der Abgaseintrittsseite beabstandeten Stelle besonders zuverlässig detektiert werden und es ist eine weiter verbesserte Überwachung des Abgasreinigungsbauteils ermöglicht.

Insbesondere ist es vorteilhaft, wenn in weiterer Ausgestaltung des Verfahrens eine Erfassung der Temperaturerhöhung in einem Bereich des Abgasreinigungsbauteils erfolgt, der in Richtung der Abgasströmung um mehr als 10 mm, insbesondere um mehr als 30 mm von dessen Abgaseintrittsseite entfernt ist. Dies gilt insbesondere für das vom motorischen Abgas zuerst beaufschlagte Abgasreinigungsbauteil. Sind dem Abgasreinigungsbauteil ein oder mehrere insbesondere katalytische Abgasreinigungskomponenten vorgeschaltet, so kann die Erfassung der Temperaturerhöhung auch unmittelbar am eintrittseitigen Ende des Abgasreinigungsbauteils erfolgen.

In weiterer Ausgestaltung des Verfahrens erfolgt eine Erfassung der Temperaturerhöhung mit einem Temperatursensor, der so in das Abgasreinigungsbauteil eingesetzt ist, dass ein temperatursensitiver Teil des Temperatursensors in Wärmeübertragungskontakt mit dem Gasspeichermaterial steht. Auf diese Weise kann eine Temperaturänderung des Gasspeichermaterials infolge eines Modifikationsübergangs besonders empfindlich und genau erfasst werden. Dabei ist es besonders vorteilhaft, wenn in weiterer Ausgestaltung des Verfahrens die Erfassung der Temperaturerhöhung mit einem Temperatursensor mit einer geringen thermischen Masse erfolgt. Dies ist beispielsweise dann gegeben, wenn die Wärmekapazität des relevanten Temperatursensorteils etwa in der Größenordnung der von ihm erfassten Gasspeichermaterialmenge ist.

Vorteilhafte Ausführungsformen.der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:
- Fig. 1a: ein Diagramm eines zeitlichen Verlaufs von Drehzahl und Ansaugluftmassenstrom bei einem Betriebsart- wechsel einer Brennkraftmaschine von einem Zugbe- trieb in einen Schubbetrieb,
- Fig. 1b: ein Diagramm eines zeitlichen Verlaufs der Abgas- Luftzahl bei einem Betriebsartwechsel gemäß Fig. 1a,
- Fig. 1c: ein Diagramm eines zeitlichen Verlaufs von Tempera- turen in einem im Abgasstrang der Brennkraftmaschine angeordneten Katalysator mit Sauerstoffspeicher- fähigkeit bei einem Betriebsartwechsel gemäß Fig. 1a,
- Fig. 2a bis 2c: Diagramme entsprechend den Fig. 1a bis 1c für einen Katalysator ohne Sauerstoffspeicherfähigkeit,
- Fig. 3a bis 3c: Diagramme entsprechend den Fig. 1a bis 1c für einen Betriebsartwechsel ausgehend von einem demgegenüber niedrigeren Lambdawert im Zugbetrieb,
- Fig. 4a bis 4c: Diagramme entsprechend den Fig. 1a bis 1c für einen Betriebsartwechsel mit einem demgegenüber verringerten Luftmassenstrom,
- Fig. 5a bis 5c: Diagramme entsprechend den Fig. 1a bis 1c für einen Betriebsartwechsel mit einem demgegenüber im Schubbetrieb erhöhten Schubluftmassenstrom,
- Fig. 6a bis 6c: Diagramme entsprechend den Fig. 1a bis 1c für einen Betriebsartwechsel mit einem demgegenüber im Schubbetrieb erhöhten Kohlenwasserstoffgehalt im Abgas und
- Fig. 7a bis 7c: Diagramme entsprechend den Fig. 1a bis 1c für einen Katalysator ohne Sauerstoffspeicherfähigkeit jedoch mit einem erhöhten Brenngaseintrag beim Betriebsartwechsel.

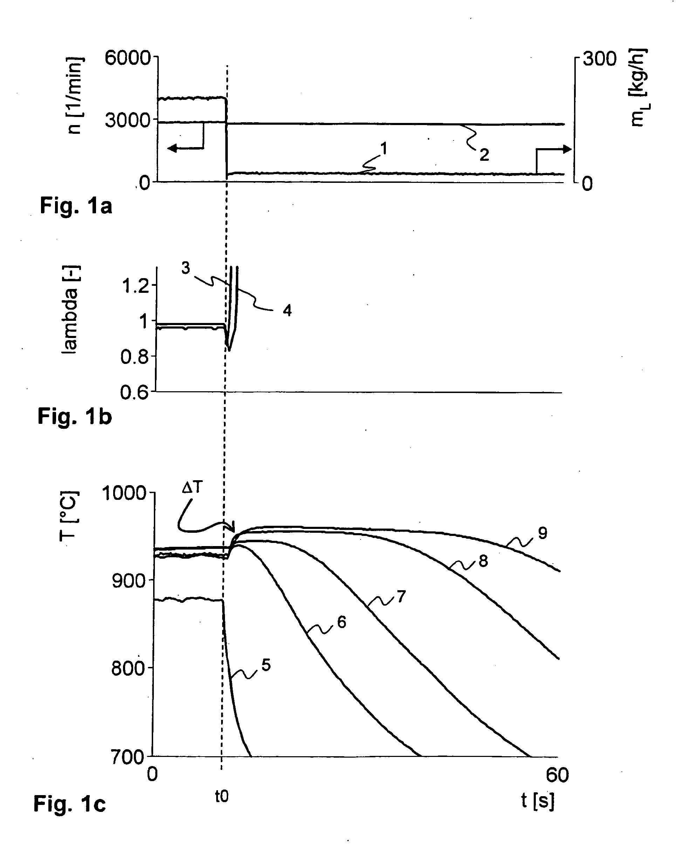

Nachfolgend wird anhand der Fig. 1a bis 1c das dem erfindungsgemäßen Verfahren zugrunde liegende Prinzip näher erläutert. Ausgegangen wird dabei von einem Pkw mit einem Ottomotor als Brennkraftmaschine, in dessen Abgasstrang motornah ein Abgaskatalysator als so genannter Vorkatalysator oder Stirnwandkatalysator angeordnet ist. In dem hier diskutierten Fall wird ein herkömmlicher Keramikträgerkatalysator mit einer als Sauerstoffspeicher wirkenden Ceroxid-haltigen Beschichtung betrachtet. Der Katalysator ist in Wabenkörperbauform mit einer Länge von etwa 80 mm ausgeführt. Obschon das erfindungsgemäße Verfahren auch bei anderen Abgasreinigungsbauteilen mit Gasspeicherfähigkeit anwendbar ist, ist es zur Überwachung und Diagnose von Vorkatalysatoren besonders geeignet, da diese Katalysatoren einer sehr hohen Temperaturbelastung ausgesetzt sind und daher bei ihnen die Gefahr einer Alterung oder einer Beschädigung erhöht ist. Als Sauerstoff speichernde Materialien kommen dabei neben Ceroxid auch andere Oxide, insbesondere Oxide der Seltenen Erden wie Lanthan oder Praseodym in Frage.

Zu dem in den Diagrammen mit t0 bezeichneten Zeitpunkt wechselt der Betriebszustand der Brennkraftmaschine von einem Zugbetrieb mit Leistungsabgabe auf einen Schubbetrieb mit Leistungsaufnahme. Im Schubbetrieb erfolgt eine so genannte Schubabschaltung mit Abschaltung der Kraftstoffzufuhr und Drosselung der Ansaugluft. Infolgedessen sinkt der angesaugte Luftmassenstrom m_{L} zum Zeitpunkt t0 schlagartig ab, während die Brennkraftmaschinendrehzahl n nahezu konstant bleibt, was durch den Verlauf der Spuren 1 und 2 im Diagramm der Fig. 1a wiedergegeben ist.

Das im Zugbetrieb schwach fett eingestellte Luft-Kraftstoffverhältnis der Brennkraftmaschine von etwa λ = 0,97 wechselt beim Übergang in den Schubbetrieb infolge der fehlenden Kraftstoffzufuhr auf einen sehr hohen Wert. Dies macht sich in einem entsprechenden Wechsel der Abgaszusammensetzung von schwach reduzierend nach stark oxidierend bemerkbar, was durch den Verlauf der Abgas-Luftzahl λ zum Ausdruck kommt. Im Diagramm der Fig. 1b sind die entsprechenden λ-Werte der Abgas-Luftzahlen vor und nach dem Katalysator (Spuren 3 und 4) dargestellt. Dabei erfolgt der Anstieg der Abgas-Luftzahl λ nach dem Vorkatalysator (Spur 4) gegenüber dem vor dem Katalysator (Spur 3) etwas verzögert, was in der Abgaslaufzeit sowie der Sauerstoffspeicherfähigkeit der Katalysatorbeschichtung begründet ist.

Interessant sind in diesem Zusammenhang die im Diagramm der Fig. 1c dargestellten Verläufe der Abgastemperatur und der Temperaturen im Abgaskatalysator. Dabei ist der Verlauf der Abgastemperatur vor dem Katalysator durch die Spur 5 wiedergegeben. Die Spuren 6, 7, 8 und 9 geben Verläufe von Temperaturen wieder, welche im Abstand von etwa 5 mm, 20 mm, 40 mm und 60 mm von der Abgaseintrittsseite im Katalysator durch Messung mit einem jeweiligen Thermoelement erfasst wurden. Wie ersichtlich, sinkt infolge der Schubabschaltung zum Zeitpunkt t0 die Abgastemperatur vor dem Katalysator schlagartig sehr stark ab. Hingegen steigen die Temperaturen der Katalysatorbeschichtung zunächst an. Insbesondere ist bemerkenswert, dass dieser Anstieg an den in unterschiedlicher Entfernung vom Abgaseintritt angeordneten Messstellen nahezu gleichzeitig erfolgt. Ursache hierfür ist ein exothermer Modifikationsübergang der als Sauerstoffspeicher wirkenden Cer-haltigen Komponenten der Katalysatorbeschichtung. Das bei den reduzierenden Bedingungen des Zugbetriebs in reduzierter Form, beispielsweise als Ce₂O₃ vorliegende Cer wandelt sich bei den sich mit Übergang in den Schubbetrieb einstellenden oxidierenden Bedingungen in eine sauerstoffreichere Modifikation, beispielsweise in CeO₂ um. Diese Sauerstoffaufnahmereaktion verläuft sehr rasch und ist exotherm, weshalb die Temperatur der Katalysatorbeschichtung ansteigt. Durch die mit der Cer-haltigen Beschichtung in thermischem Kontakt stehenden Thermoelemente wird der resultierende Temperaturanstieg ΔT erfasst. Infolge der niedrigen Abgastemperatur vor dem Katalysator nimmt im weiteren Verlauf die Temperatur der Katalysatorbeschichtung wieder ab. Die Temperaturabnahme erfolgt katalysatorausgangsseitig (Spur 9) jedoch erheblich langsamer als katalysatoreintrittsseitig (Spur 6). Dies zeigt den Unterschied zwischen einer vergleichsweise trägen, durch Konvektion verursachten Temperaturänderung und einer unmittelbar in der Beschichtung wirkenden Temperaturänderung infolge eines Modifikationsübergangs des Sauerstoffspeichermaterials.

Aufgrund der Natur der Temperaturänderung ΔT kann auf einfache Weise ermittelt werden, ob und in welchem Umfang ein Modifikationsübergang eintritt, d.h. ob und in welchem Umfang Sauerstoffspeicherfähigkeit zur Verfügung steht. Da eine Katalysatoralterung, beispielsweise infolge einer Einwirkung erhöhter Temperaturen oder einer Vergiftung, sich durch einen Rückgang der Sauerstoffspeicherfähigkeit bemerkbar macht, kann durch Auswertung der Temperaturänderung ΔT beim Betriebsartwechsel der Alterungszustand des Katalysators beurteilt und eine Katalysatordiagnose durchgeführt werden. Hierzu wird beispielsweise die Größe der Temperaturänderung ΔT oder das Verhältnis der Temperaturwerte vor und unmittelbar nach dem Betriebsartwechsel ermittelt und mit einem Referenzwert verglichen.

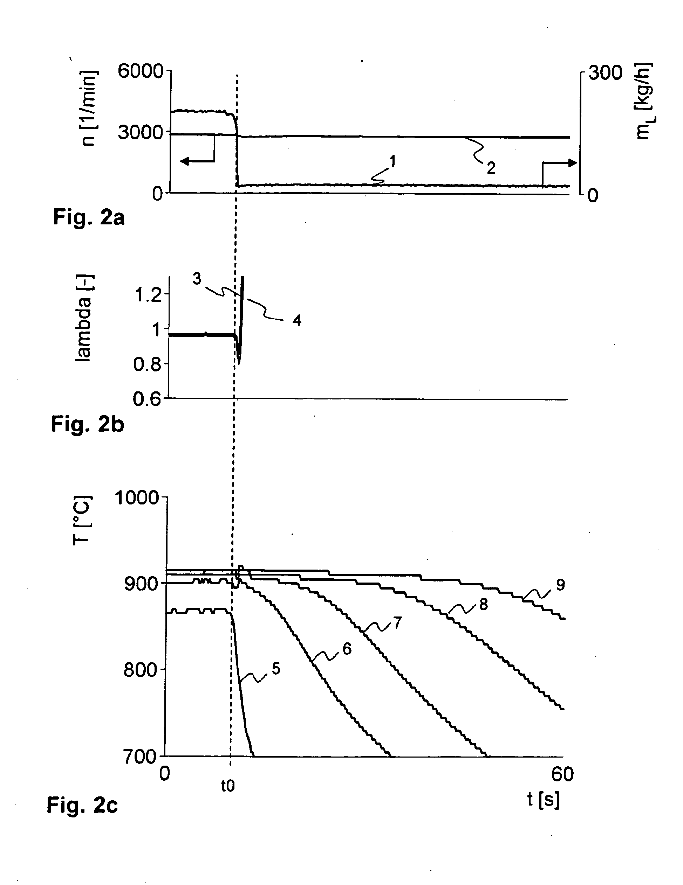

Zur Verdeutlichung des Sachverhalts sind in den Diagrammen der Figuren 2a bis 2c die sich bei einem Katalysator ohne Sauerstoffspeicherfähigkeit ergebenden Verhältnisse dargestellt. Dabei ist die Art des Betriebsartwechsels analog zu dem in den Figuren 1 a bis 1c dargestellten. Entsprechend dieser Analogie sind die Spuren der Diagramme mit gegenüber den Figuren 1a bis 1c unveränderten Bezugsziffern bezeichnet. Bei dem bereits beschriebenen Übergang von einem Zugbetrieb in die Schubabschaltung tritt hier keine Temperaturänderung in der Katalysatorbeschichtung auf. Dabei ist es unerheblich, ob der Katalysator von vornherein über keine Sauerstoffspeicherfunktion verfügt oder diese im Laufe der Zeit vollständig verloren hat.

Es ist bevorzugt, wenn für eine Beurteilung der Katalysatoralterung die bei einem Wechsel von reduzierenden Abgasbedingungen zu oxidierenden Abgasbedingungen auftretende Temperaturänderung ausgewertet wird. Ein Betriebsartwechsel von einem Zugbetrieb der Brennkraftmaschine in einen Betrieb mit Schubabschaltung ist hierfür besonders geeignet. Da diese Art von Betriebsartwechsel beim normalen Fahrbetrieb eines Kraftfahrzeugs häufig auftreten, kann das geschilderte Verfahren zur Katalysatordiagnose in vergleichsweise geringen zeitlichen Abständen angewendet werden. Auf diese Weise ist eine besonders genaue Diagnose, beispielsweise durch Ermitteln eines gleitenden Mittelwerts für eine aus der Temperaturerhöhung abgeleitete Alterungskennzahl ermöglicht. Prinzipiell könnte auch die Temperaturänderung bei einer Wärmeaufnahme infolge eines Übergangs von der sauerstoffreichen Modifikation in die sauerstoffarme Modifikation ausgewertet werden, da der Vorgang der Sauerstoffspeicherung reversibel ist und bei einem erneuten Wechsel zu reduzierenden Abgasbedingungen das Cer-haltige Sauerstoffspeichermaterial wieder in seine sauerstoffarme Modifikation übergeht. Es ist jedoch schwierig, die dabei auftretende Wärmeaufnahme messtechnisch zu erfassen.

Aus dem erläuterten Sachverhalt ergibt sich, dass durch einen Wechsel eines Brennkraftmaschinenbetriebs mit weniger stark oxidierender Abgaszusammensetzung zu einem Betrieb mit stärker oxidierender Abgaszusammensetzung (oder umgekehrt) keine Temperaturerhöhung in der Katalysatorbeschichtung eintritt. Gleiches gilt bei sich ändernden Bedingungen, bei denen jeweils reduzierende Abgasbedingungen mit einer Luftzahl von λ < 1,0 erhalten bleiben. Es ergeben sich jeweils Verhältnisse, die den in den Diagrammen der Figuren 2a bis 2c dargestellten Verhältnissen entsprechen. Auf eine weitere Darstellung wird daher verzichtet.

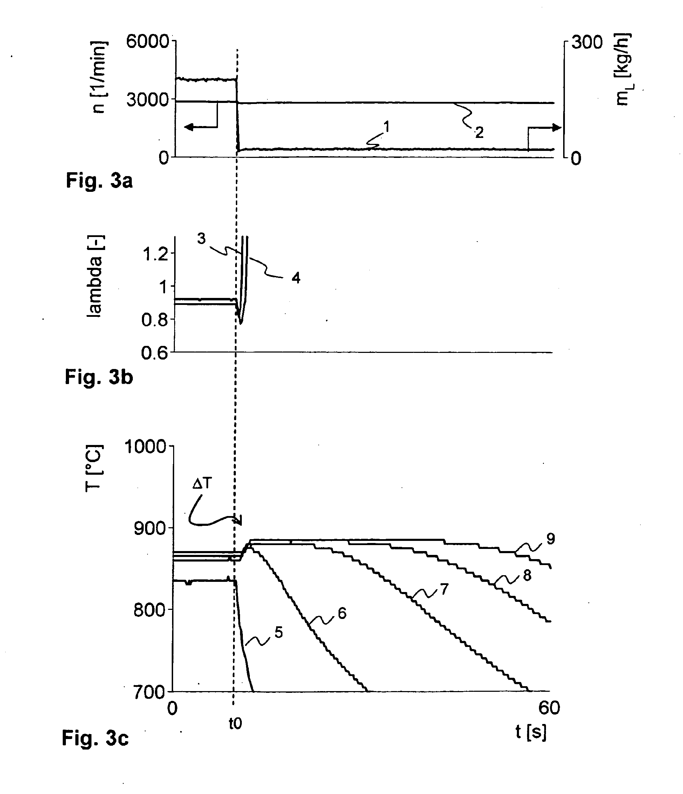

Ein besonderer Vorteil des erfindungsgemäßen Verfahrens im Vergleich zu anderen Verfahren zur Ermittlung einer Gasspeicherfähigkeit bzw. einer Sauerstoffspeicherfähigkeit von Abgasreinigungsbauteilen besteht in seiner Unempfindlichkeit gegenüber schwankenden Randbedingungen. Nachfolgend wird dies anhand der Figuren 3a bis 6c erläutert. Dabei entspricht jede Diagrammgruppe derjenigen der Figuren 1a bis 1c, wobei sich die jeweiligen Bedingungen im Wesentlichen ebenfalls entsprechen, weshalb nachfolgend lediglich auf die wichtigsten Unterschiede eingegangen wird.
Die Unempfindlichkeit gegenüber den Ausgangsbedingungen für einen Betriebsartwechsel vom Zugbetrieb in die Schubabschaltung verdeutlichen die Diagramme der Figuren 3a bis 3c. Im Unterschied zu den Diagrammen der Figuren 1 a bis 1c erfolgt jedoch hier der Lastsprung der Brennkraftmaschine ausgehend von einem Luft-Kraftstoffverhältnis der Brennkraftmaschine von etwa λ = 0,90, also von einem deutlich fetteren Wert. Es ergibt sich eine nahezu ebenso starke Temperaturerhöhung ΔT bei den einzelnen Messstellen im Katalysator wie bei dem in den Figuren 1a bis 1c dargestellten Lastsprung ausgehend von λ = 0,97.

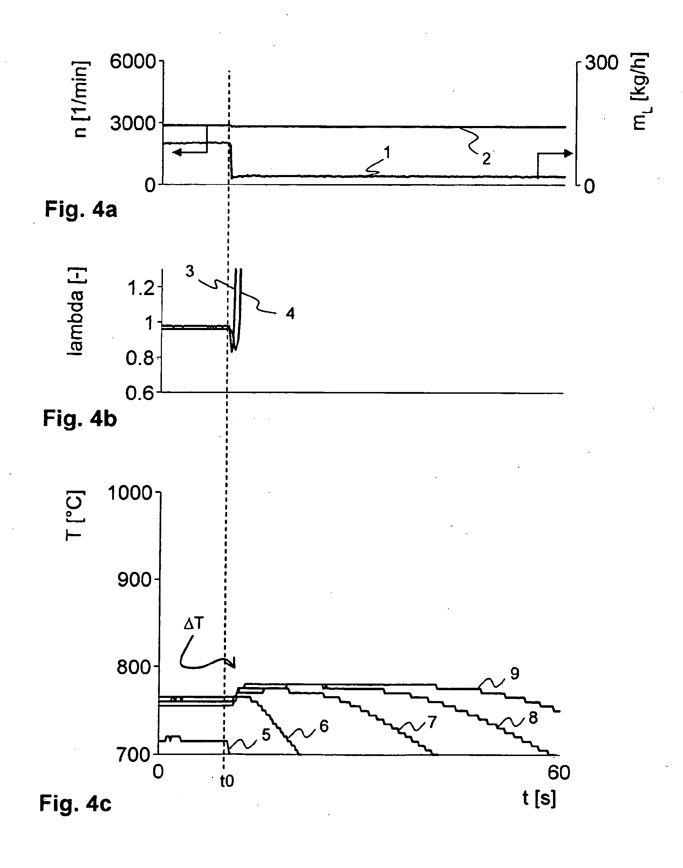

Auch eine Änderung des Luftmassenstroms und damit des Abgasmassenstroms beeinflusst die Größe der Temperaturerhöhung ΔT im Katalysatormaterial kaum, wie ein Vergleich der Diagramme der Figuren 4a bis 4c mit denen der Figuren 1a bis 1c zeigt. Gegenüber den Verhältnissen der Figuren 1a bis 1c ist hier der Luftmassenstrom m_{L} lediglich halb so groß, wohingegen die Größe der Temperaturerhöhung ΔT, ausgehend von einem niedrigeren Wert nahezu unverändert ist, wie dem Diagramm der Fig. 4c entnommen werden kann.

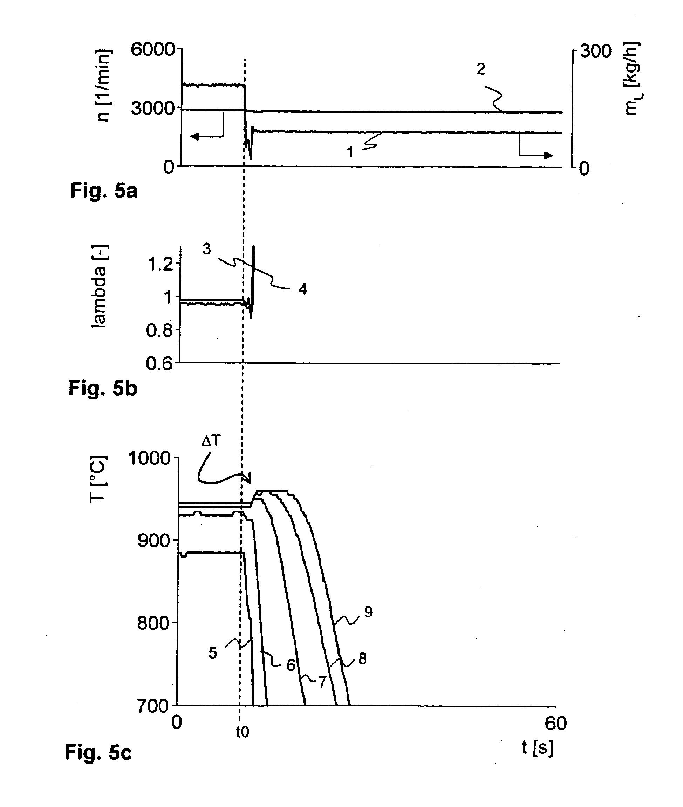

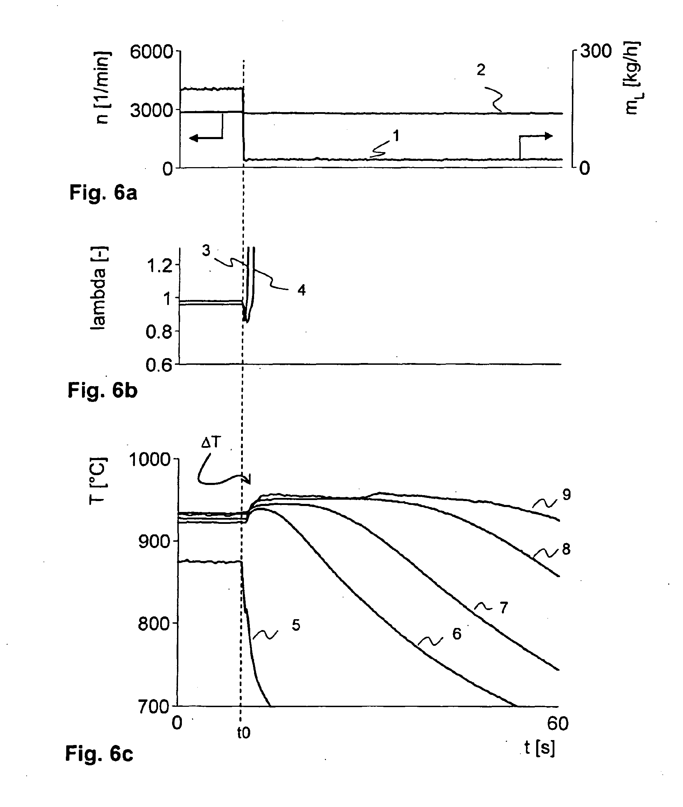

Auch die Größe des nach dem Wechsel in den Schubbetrieb eingestellten Schubluftmassenstrom ist nahezu ohne Einfluss auf die Größe der Temperaturerhöhung, wie ein Vergleich der Diagramme der Figuren 5a bis 5c mit denen der Figuren 1a bis 1c zeigt. Gegenüber den Verhältnissen der Figuren 1a bis 1c ist der Schubluftmassenstrom vervierfacht, was zwar eine schnellere Abkühlung des Vorkatalysators zur Folge hat, jedoch nahezu ohne Einfluss auf die Temperaturerhöhung ΔT unmittelbar nach dem Lastsprung zum Zeitpunkt t0 ist. Gleichfalls von unbedeutendem Einfluss ist ein mäßiger Eintrag von reduzierenden Bestandteilen ins Abgas nach erfolgtem Wechsel in die Schubbetriebsphase. Bei dem in den Diagrammen der Figuren 6a bis 6c dargestellten Betriebsartwechsel erfolgte im Gegensatz zu dem in den Diagrammen der Figuren 1a bis 1c dargestellten Fall eine Teillastentlüftung des Kurbelgehäuses während des Schubbetriebs. Durch die Teillastentlüftung werden in der Schubbetriebsphase ab dem Zeitpunkt t0 zusätzlich Kohlenwasserstoffe der Ansaugluft zugeführt, die sich infolge fehlender Verbrennung in den Brennräumen der Brennkraftmaschine im Abgas vor dem Vorkatalysator wiederfinden. Im Vorkatalysator werden die Kohlenwasserstoffe oxidiert, was dort eine entsprechenden Wärmefreisetzung zur Folge hat. Daraus resultiert zwar eine etwas langsamere Abkühlung des Vorkatalysators im Vergleich zu dem Fall ohne Teillastentlüftung, die unmittelbar mit dem Lastsprung eintretende Temperaturerhöhung ΔT im Vorkatalysator ist davon jedoch unbeeinflusst.

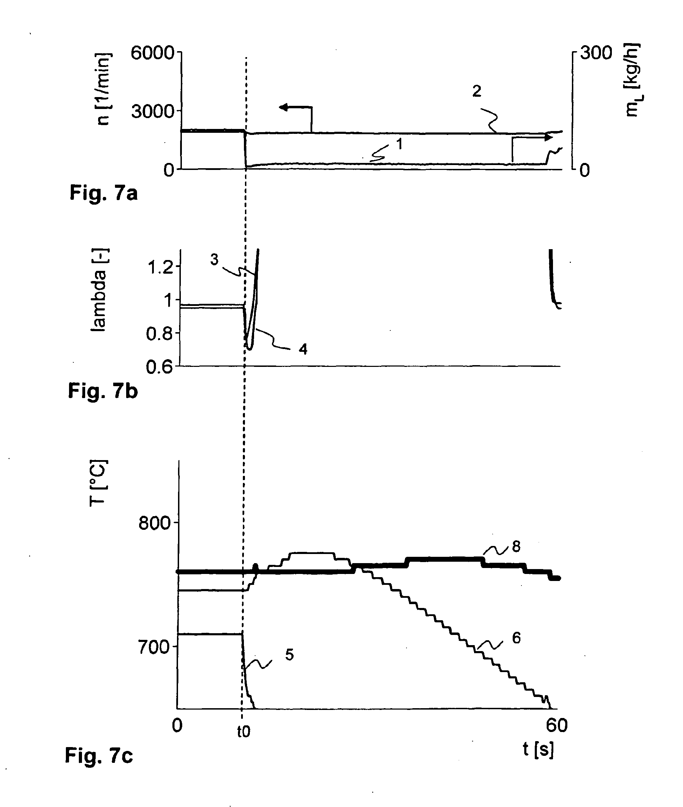

Die in den Diagrammen der Figuren 7a bis 7c dargestellten Verläufe verdeutlichen im Vergleich zu den Diagrammen der Figuren 1a bis 1c nochmals einerseits den Unterschied zwischen einer durch eine Gasoxidation und einer durch einen Modifikationswechsel verursachten Temperaturerhöhung im Katalysator und andererseits den Unterschied zwischen einem Katalysator ohne Sauerstoff speichernder Beschichtung und einem Katalysator mit Sauerstoff speichernder Beschichtung. Dabei erfolgte hier ein Betriebsartwechsel mit einem sehr stark erhöhten, vorübergehenden Brenngaseintrag im Vergleich zu dem in den Figuren 1a bis 1c dargestellten Fall. Ein solcher Betriebsartwechsel mit vorübergehend sehr stark erhöhtem Brenngaseintrag kann beispielsweise durch ansaugseitiges Ablösen eines Kraftstoff- oder Ölwandfilms beim Übergang vom Zugbetrieb mit schwach reduzierenden Abgasverhältnissen zu einem Schubbetrieb mit stark oxidierenden Abgasverhältnissen eintreten. Dabei vorübergehend ins Abgas gelangende brennbare Bestandteile werden im Katalysator oxidiert. Dies äußert sich in einer sich wellenartig entlang der Strömungsrichtung im Katalysatorbett ausbreitende Temperaturerhöhung, die sich mit zunehmender Entfernung vom Katalysatoreintritt abschwächt. Wie im Diagramm der Fig. 7c dargestellt, treten die Temperaturerhöhungen im Bereich des Katalysatoraustritts (Spur 8) verzögert und abgeschwächt gegenüber denen im Bereich des Katalysatoreintritts (Spur 6) auf.

Ein solches Verhalten ist typischerweise auch bei einem Katalysator mit einer Sauerstoff speichernden Beschichtung festzustellen. Bei einem Katalysator mit Sauerstoff speichernder Beschichtung tritt jedoch zusätzlich ein Modifikationsübergang im Sauerstoffspeichermaterial auf. Die damit verbundene Temperaturerhöhung ΔT tritt dabei, wie im Diagramm der Fig. 1c dargestellt, nahezu verzögerungsfrei längs des Katalysatorbetts überall etwa gleichzeitig auf. Folglich kann bei einer beabstandet zum Katalysatoreintritt vorgenommenen Temperaturmessung zwischen der temperaturerhöhenden Wirkung einer Gasoxidation und eines Modifikationsübergangs im Katalysatormaterial unterschieden werden. Dies bedeutet, dass bei einer beabstandet zum Katalysatoreintritt vorgenommenen Temperaturerfassung eine besonders zuverlässige Katalysatorüberwachung mit Ermittlung der dort vorhandenen Sauerstoffspeicherfähigkeit vorgenommen werden kann. Dabei wird der unmittelbar bei einem Betriebsartwechsel der Brennkraftmaschine mit einen Übergang von reduzierenden Abgasbedingungen mit Sauerstoffmangel zu oxidierenden Abgasbedingungen mit Sauerstoffüberschuss auftretende Temperaturanstieg ausgewertet. Auf diese Weise können durch Gasoxidationen hervorgerufene Temperatureffekte wirksam ausgeblendet werden.

Aus den oben dargestellten Zusammenhängen ergibt sich, dass es vorteilhaft ist, wenn eine Erfassung der Temperaturänderungen in Bezug auf die Abgasströmungsrichtung mit gewissem Abstand zum Abgaseintritt in das Abgasreinigungsbauteil vorgenommen wird. Vorteilhaft ist bei üblichen Katalysatoren ein Abstand von wenigstens 10 mm vom Abgaseintritt. Bevorzugt beträgt der Abstand etwa 20 mm und besonders bevorzugt ist ein Abstand von mehr als 30 mm. Dabei ist die Gesamtbauteillänge nicht entscheidend. In den geschilderten Versuchen wurde ein Katalysator mit einer Länge von etwa 75 mm eingesetzt. Auf diese Weise werden Beeinflussungen durch wärmeliefernde Gasreaktionen begrenzt. Andererseits sind Alterungseffekte eintrittsseitig meist besonders ausgeprägt. Aus diesem Grund ist eine Temperaturerfassung in einem Bauteilbereich vorteilhaft, in welchem Temperaturerhöhungen infolge Gasoxidation gegenüber den durch einem Modifikationsübergang des Gasspeichermaterials verursachten Temperaturerhöhungen verzögert auftreten. Da die genannten negativen Beeinflussungen fehlen, wenn dem überwachten Abgasreinigungsbauteil ein katalytisch wirkendes Bauteil vorgeschaltet ist, kann in einem solchen Fall eine Erfassung der Temperaturerhöhungen auch unmittelbar am Abgaseintritt erfolgen. Dies ist beispielsweise bei einem zu überwachenden Unterbodenkatalysator der Fall, dem ein anderes katalytisch wirkendes Bauteil vorgeschaltet ist.

Aus den obigen Erläuterungen ergibt sich, dass das erfindungsgemäße Verfahren vergleichsweise unempfindlich in Bezug auf eine durch Oxidation von Abgasbestandteilen verursachte Wärmefreisetzung ist. Insbesondere durch eine von der Eintrittsseite des entsprechenden Katalysators beabstandete Anordnung des Temperatursensors können durch Gasoxidationen verursachte Störeffekte weitgehend ausgeschaltet werden. Es kann jedoch eine besonders zuverlässige Katalysatorüberwachung erzielt werden, wenn durch Modifikationsübergänge verursachte Temperaturänderungen im Katalysatormaterial lediglich für Betriebsartwechsel der Brennkraftmaschine ausgewertet werden, bei denen die Abgaszusammensetzung vor dem Wechsel reduzierend und nach dem Wechsel im Wesentlichen frei von reduzierenden Bestandteilen ist. Auf diese Weise ist eine besonders zuverlässige Erfassung der mit dem Modifikationsübergang im Katalysatormaterial verbundenen Temperaturänderung ermöglicht, da störende Wärmetönungen von Gasoxidationsreaktion nicht auftreten.

Zur Erfassung der Temperaturerhöhungen des Abgasreinigungsbauteils bzw. seiner Beschichtung ist es vorteilhaft, wenn entsprechend temperaturbeständige Thermoelemente oder Widerstandsthermometer als Temperatursensoren eingesetzt werden. Vorzugsweise sind diese mit einer Ummantelung versehen. Dadurch ist der temperatursensitive Bereich vor direktem Kontakt mit dem Abgas geschützt. Zweckmäßigerweise ist der Temperatursensor jedoch derart in das Abgasreinigungsbauteil eingesetzt, dass der temperatursensitive Teil in wärmeleitender oder wärmeübertragender Verbindung mit dem Abgasreinigungsbauteil bzw. dessen Beschichtung steht. Vorzugsweise wird ein Temperatursensor mit geringer thermischer Masse eingesetzt. Vorteilhaft ist beispielsweise die Verwendung eines mineralisolierten Mantelthermoelements mit einem Manteldurchmesser von 10 mm. Besonders bevorzugt ist ein Manteldurchmesser von 5 mm oder weniger. Zur Temperaturmessung an axial oder radial versetzten Stellen im Abgasreinigungsbauteil ist der Einsatz eines Temperatursensors mit mehreren Messstellen in einem gemeinsamen Schutzrohr zweckmäßig. Auf diese Weise kann der Alterungszustand des Abgasreinigungsbauteils ortsaufgelöst an mehreren axial oder radial zueinander versetzten Stellen ermittelt werden.

Das erfindungsgemäße Verfahren ist für alle Abgasreinigungsbauteile anwendbar, bei denen in einem dem Bauteil zugeordneten Feststoff Modifikationsübergänge mit einer Wärmetönung, insbesondere infolge einer Änderung der Abgaszusammensetzung, auftreten können. Dabei kann aus der Größe des erfassten Temperaturanstiegs die vorhandene Menge des zum Modifikationswechsel befähigten Feststoff bzw. dessen alterungsbedingter Schwund und daraus die Katalysatoralterung ermittelt werden. Vorzugsweise wird für eine Bewertung ein Vergleich mit abgespeicherten Referenzwerten vorgenommen und beispielsweise eine Alterungskennzahl ermittelt.

Das Abgasreinigungsbauteil sollte das zum Modifikationswechsel befähigte Material ursprünglich zumindest abschnittsweise aufweisen, wobei eine Temperaturerfassung dann in diesem Abschnitt erfolgt. Insbesondere ist das Verfahren zur Überwachung von Bauteilen mit einer Sauerstoffspeicherfähigkeit geeignet.

## Patentansprüche

1. Verfahren zur Überwachung eines Abgasreinigungsbauteils mit Gasspeicherfähigkeit zur Reinigung von Abgasen einer Brennkraftmaschine, wobei das Abgasreinigungsbauteil ein Gasspeichermaterial aufweist, das bei einer Speicherung des Gases wenigstens teilweise von einer ersten Modifikation in eine zweite Modifikation übergeht,
**dadurch gekennzeichnet, dass**
eine im Wesentlichen auf einer Wärmetönung des Modifikationsübergangs beruhende Temperaturänderung (ΔT) des Abgasreinigungsbauteils und/oder des Gasspeichermaterials ausgewertet wird.

2. Verfahren nach Anspruch 1,
**dadurch gekennzeichnet, dass**
die Temperaturänderung (ΔT) in Bezug auf eine Alterung des Abgasreinigungsbauteils ausgewertet wird.

3. Verfahren nach Anspruch 1 oder 2,
**dadurch gekennzeichnet, dass**
eine bei einem Betriebsartwechsel der Brennkraftmaschine auftretende Temperaturänderung (ΔT) ausgewertet wird.

4. Verfahren nach Anspruch 3,
**dadurch gekennzeichnet, dass**
die bei einem Wechsel von einem Zugbetrieb der Brennkraftmaschine mit unterstöchiometrischen Luft-Kraftstoffverhältnis (λ < 1,0) zu einem Schubbetrieb mit überstöchiometrischen Luft-Kraftstoffverhältnis (λ > 1,0) auftretende Temperaturerhöhung (ΔT) ausgewertet wird.

5. Verfahren nach einem der Ansprüche 1 bis 4,
**dadurch gekennzeichnet, dass**
ein Abgasreinigungsbauteil mit Sauerstoffspeicherfähigkeit überwacht wird.

6. Verfahren nach einem der Ansprüche 1 bis 5,
**dadurch gekennzeichnet, dass**
ein Abgasreinigungsbauteil mit einem Ceroxid-haltigen Gasspeichermaterial überwacht wird.

7. Verfahren nach einem der Ansprüche 1 bis 6,
**dadurch gekennzeichnet, dass**
Temperaturänderungen (ΔT) an wenigstens zwei unterschiedlichen Stellen im Abgasreinigungsbauteil erfasst werden.

8. Verfahren nach einem der Ansprüche 1 bis 7,
**dadurch gekennzeichnet, dass**
eine Erfassung der Temperaturänderung (ΔT) an einer in Richtung der Abgasströmung von einer Abgaseintrittsseite des Abgasreinigungsbauteils beabstandeten Stelle erfolgt.

9. Verfahren nach einem der Ansprüche 1 bis 8,
**dadurch gekennzeichnet, dass**
eine Erfassung der Temperaturerhöhung (ΔT) in einem Bereich des Abgasreinigungsbauteil erfolgt, die in Richtung der Abgasströmung um mehr als 10 mm, insbesondere um mehr als 20 mm von dessen Abgaseintrittsseite entfernt ist.

10. Verfahren nach einem der Ansprüche 1 bis 9,
**dadurch gekennzeichnet, dass**
eine Erfassung der Temperaturerhöhung (ΔT) mit einem Temperatursensor erfolgt, der so in das Abgasreinigungsbauteil eingesetzt ist, dass ein temperatursensitiver Teil des Temperatursensors in Wärmeübertragungskontakt mit dem Gasspeichermaterial steht.

11. Verfahren nach einem der Ansprüche 1 bis 10,
**dadurch gekennzeichnet, dass**
eine Erfassung der Temperaturerhöhung (ΔT) mit einem Temperatursensor mit einer geringen thermischen Masse erfolgt.

## Claims

1. Method for monitoring an exhaust gas purifying component which has the ability to store gas for the purification of exhaust gases from an internal combustion engine, such that the exhaust gas purifying component comprises a gas storage material which, when storing the gas, undergoes a transition at least partially from a first modification to a second modification,
**characterised in that**
a temperature change (ΔT) of the exhaust gas purifying component and/or of the gas storage material that depends essentially on the heat of transformation of the modification transition is evaluated.

2. Method according to Claim 1,
**characterised in that**
the temperature change (ΔT) is evaluated in relation to ageing of the exhaust gas purifying component.

3. Method according to Claims 1 or 2,
**characterised in that**
a temperature change (ΔT) that takes place when the operating mode of the internal combustion engine is changed is evaluated.

4. Method according to Claim 3,
**characterised in that**
the temperature increase (λT) that takes place on changing from traction operation of the internal combustion engine with an under-stoichiometric air-fuel ratio (λ< 1.0) to thrust operation with an above-stoichiometric air-fuel ratio (Δ1.0) is evaluated.

5. Method according to any of Claims 1 to 4,
**characterised in that**
an exhaust gas purifying component with the ability to store oxygen is monitored.

6. Method according to any of Claims 1 to 5,
**characterised in that**
an exhaust gas purifying component with a gas storage material containing cerium oxide is monitored.

7. Method according to any of Claims 1 to 6,
**characterised in that**
temperature changes (ΔT) are determined at least at two different places in the exhaust gas purifying component.

8. Method according to any of Claims 1 to 7,
**characterised in that**
the temperature change (ΔT) at a point a distance away from an exhaust gas inlet side of the exhaust gas purifying component in the exhaust gas flow direction is determined.

9. Method according to any of Claims 1 to 8,
**characterised in that**
the temperature increase (ΔT) is measured in an area of the exhaust gas purifying component which, in the exhaust gas flow direction, is more than 10 mm and in particular more than 20 mm away from its exhaust gas inlet side.

10. Method according to any of Claims 1 to 9,
**characterised in that**
the temperature increase (ΔT) is determined by a temperature sensor which is positioned in the exhaust gas purifying component in such manner that a temperature-sensitive part of the temperature sensor is in heat-transferring contact with the gas storage material.

11. Method according to any of Claims 1 to 10,
**characterised in that**
the temperature increase (ΔT) is determined by a temperature sensor whose thermal mass is small.

## Revendications

1. Procédé de surveillance d'une partie structurale de purification des gaz d'échappement possédant une capacité d'accumulation des gaz pour la purification des gaz d'échappement d'un moteur à combustion interne, ladite partie structurale comportant une matière d'accumulation des gaz qui, lors de l'accumulation des gaz, passe au moins partiellement d'un premier état à un second état, **caractérisé en ce qu'**un changement de température (ΔT), reposant essentiellement sur une chaleur de réaction de la modification d'état de la partie structurale de purification des gaz et / ou de la matière d'accumulation des gaz est évalué.

2. Procédé selon la revendication 1, **caractérisé en ce que** le changement de température (ΔT) est évalué en fonction d'un vieillissement de la partie structurale de purification des gaz d'échappement.

3. Procédé selon la revendication 1 ou 2, **caractérisé en ce qu'**un changement de température (ΔT) est évalué lors d'une modification du mode de fonctionnement du moteur à combustion interne.

4. Procédé selon la revendication 3, **caractérisé en ce que** l'augmentation de la chaleur est évaluée lors d'un changement d'un mode traction du moteur à combustion interne avec un rapport air / carburant (λ< 1,0) substoechiométrique à un mode propulsion avec un rapport air / carburant ((λ> 1,0) surstoechiométrique.

5. Procédé selon l'une quelconque des revendications 1 à 4, **caractérisé en ce qu'**une partie structurale de purification des gaz d'échappement avec une capacité d'accumulation d'oxygène est surveillée.

6. Procédé selon l'une quelconque des revendications 1 à 5, **caractérisé en ce qu'**une partie structurale de purification des gaz d'échappement comportant une matière d'accumulation des gaz contenant de l'oxyde de cérium est surveillée.

7. Procédé selon l'une quelconque des revendications 1 à 6, **caractérisé en ce que** les changements de température (ΔT) sont détectés au moins à deux endroits différents dans la partie structurale de purification des gaz d'échappement.

8. Procédé selon l'une quelconque des revendications 1 à 7, **caractérisé en ce que** le changement de température (ΔT) est détecté à un endroit espacé d'un côté d'entrée des gaz d'échappement de la partie structurale de purification des gaz d'échappement en direction du flux de gaz d'échappement.

9. Procédé selon l'une quelconque des revendications 1 à 8, **caractérisé en ce que** l'augmentation de la température (ΔT) est détectée dans une région de la partie structurale de purification des gaz d'échappement, qui se trouve à plus de 10 mm, en particulier à plus de 20 mm de son côté d'entrée de gaz d'échappement en direction du flux de gaz d'échappement.

10. Procédé selon l'une quelconque des revendications 1 à 9, **caractérisé en ce que** l'augmentation de la température (ΔT) est détectée au moyen d'un capteur de température qui est disposé dans la partie structurale de purification des gaz d'échappement de telle sorte qu'une partie sensible à la température du capteur de température soit en contact de transfert de chaleur avec la matière d'accumulation des gaz.

11. Procédé selon l'une quelconque des revendications 1 à 10, **caractérisé en ce que** l'augmentation de température (ΔT) est détectée au moyen d'un capteur de température avec une faible masse thermique.
